# EUROPEAN PATENT APPLICATION

(11) **EP 1 714 782 A1**
(43) Date of publication of application: **25.10.2006**
(21) Application number: 03769511.1
(22) Date of filing: 30.10.2003
(51) Int. Cl.: B32B 38/00

(54) **MACHINE FOR REPAIRING SHUTTERING PANELS AND REPAIR METHOD**

(71) Applicant: ULMA C y E, S. COOP., 20560 Onate (Guipuzcoa) (ES)
(72) Inventor: AROCENA BERGARECHE, Alberto, 20560 ONATE (Guipuzcoa) (ES); FABIAN MARIEZCURRENA, Aitor, 20560 ONATE (Guipuzcoa) (ES)
(74) Representative: Carpintero Lopez, Francisco
(86) International application number: PCT/ES2003/000559
(87) International publication number: WO 2005/042251

(57) **Abstract**

Of application for sandwich type composite panels (1) formed by a synthetic core, a structural skin and an external film or finishing skin (3) which is in contact with the concrete. The machine comprises a peeling module (4) which incorporates a battery of suction pads (5) which are applied on the upper face of the previously heated external film (3) and are raised detaching it and separating it from the composite sandwich (2), said suction pads (5) being mounted on a horizontal support (6) suspended from some side rails (7) pertaining to a gantry (8) which is displaced vertically by the action of a pneumatic cylinder (10) with respect to a frame (9), having also means of displacement (9) on which the panel (1) is mounted which is moved in the horizontal direction facilitating, together with the vertical movement of the suction pads (5), the peeling of the formwork panel (1).

## Description

### OBJECT OF THE INVENTION

The present invention relates to a machine conceived to repair the skin coating composite formwork panels or shuttering, sandwich type.

An object of the invention is that the machine has means to facilitate the removal of the external film damaged after its use in contact with the concrete and means for the application of a new film.

Another object of the invention is the repair procedure carried out by means of this machine which comprises the different phases involved in the process of replacing the damaged external film with a new film.

### BACKGROUND OF THE INVENTION

At the present time the use is known of sandwich type, composite panels, like for example those described in the Spanish patent of invention application 200301413, by this same author, which consists of a core of rubber and thermoplastic material on which is arranged, on at least one of its faces, a structural skin which endows the panel with strength and rigidity and on which is arranged the external finishing film, which constitutes the coating skin, in contact with the concrete.

These panels require repair continually to the external protective skin which is in contact with the concrete, the repair process being very laborious. In the first place, the concrete residue adhering to the coating skin has to be cleaned, by means of pressurised water jet or rotating brushes, to repair thereafter the scratches and holes which may be present, grinding the damaged surfaces by hand and filling the holes with appropriate resins.

In spite of the care with which the repairs are carried out, marks always appear and the surface quality and appearance of the walls formed with these repaired panels is not the same as that of a wall formed with a completely new panel.

To resolve this problem the employment is known of formwork panels on which the external film or coating skin can be removed and replaced with a new film when necessary.

Thus for example, in the European Patent EP 1 273 738 an installation is described wherein the repair is carried out of this type of formwork panels.

In this installation the damaged panels it is intended to change are placed in line on a conveyor belt where they are showered with hot water to heat the external film or coating skin of the body of the panel which it is intended to remove. The heating facilitates the adhesion of the external film to a pulling band which is applied continuously on the film with the help of a pressure roller.

Next the panels are made to pass through a source of infrared rays which heat the unit to a temperature of approximately 120° C to deactivate the adhesive which attaches the external film to the body of the panel. The mechanical separation of the films with respect to the body of the panel is carried out by having the panels pass over a roller which is rotating in the opposite direction to the motion of the same and which removes the band adhering to the external film and with it the actual external film or coating skin.

Subsequently one proceeds to the application of a new coating skin, for which the panels are arranged on a conveyor belt which passes under a cylinder which spreads adhesive on its surface. Next the adhesive is warmed by means of a nozzle of hot gas and a new external film is applied, under pressure, on the surface of the panel. The application of the external film is carried out by means of a feeder roller, the panel, with the new film, next passing under one or several pressure cylinders which results in the fastening of the same.

### DESCRIPTION OF THE INVENTION

The machine to repair formwork panels which constitutes the object of this invention allows the replacement to be carried out satisfactorily of the external film or coating skin which is damaged, after its use on site, with a new external film.

The machine incorporates a heating module which consists of a hot plate head displaceable vertically by hydraulic means which are applied on the damaged panels for their removal.

The machine likewise comprises a peeling module consisting of a battery of suction pads mounted on a horizontal support sustained by a gantry displaceable vertically by the action of a pneumatic cylinder with respect to the frame of the machine with the help of some side rails.

To remove the external film from the formwork panel, the suction pads descend and are applied on the surface of the film, applying suction thereafter in order to proceed subsequently to the raising of the gantry and therefore of the suction pads which will detach the external film determining the peeling of the formwork panel.

To facilitate this peeling operation the peeling module incorporates a head with some guide rollers which help to pull off the film during the suction applied by the battery of suction pads.

After the peeling module comes a cleaning module which comprises some cleaning rollers which eliminate the pieces of glue which could have remained sticking to the surface of the panel, after elimination of the external film.

Next, one proceeds to the application of a new external film which is fastened by heating with the help of the hot plate head.

The sequence or procedure for repairing panels takes place according to the stages detailed below:
- The panel is directed to the heating module in which the hot plates descend which apply heat on the surface of the external film to produce the fusing and deactivating of the adhesive present between the sandwich of the composite and the external film,
- the panel is directed to the peeling module where the suction pad gantry descends to apply the suction pads on the external film of the panel with application of the pertinent suction through the suction pads,
- raising of the suction pad gantry which progressively detaches the film as the panel is displaced, the detachment of the film being facilitated by means of some guide rollers,
- cleaning the surface of the form by means of the cleaning rollers which eliminate the remains of glue which has not been detached when removing the external film,
- application of the new external film on the sandwich of the composite and forwarding to the heating module where the hot plate head descends which presses on the film to fasten the latter on the composite sandwich,
- extraction of the panel with the new coating skin.

The new film can be manufactured in plastic material from 0.5 to 1.5 mm in thickness, preferably polypropylene, polyethylene, wood fibre polypropylene, wood fibre polyethylene, Curv, Twintex, GMT, GMTex, LDPE, HDPE or others. In any of these cases the film shall incorporate an adhesive complementarily, which adhesive can be of the type TPO which reactivates with heat in a time of 20 seconds and at a fusion temperature of 120-140° C or it can be a film type adhesive Prochimir gluefilm TC 1116 which reactivates with heat at a fusion temperature of 140° C.

These adhesives allow the polypropylene and polyethylene films to be stuck to a composite sandwich with polypropylene base without using Premier or Corona treatments, which avoids loss of time, reduces costs and simplifies the operation.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:

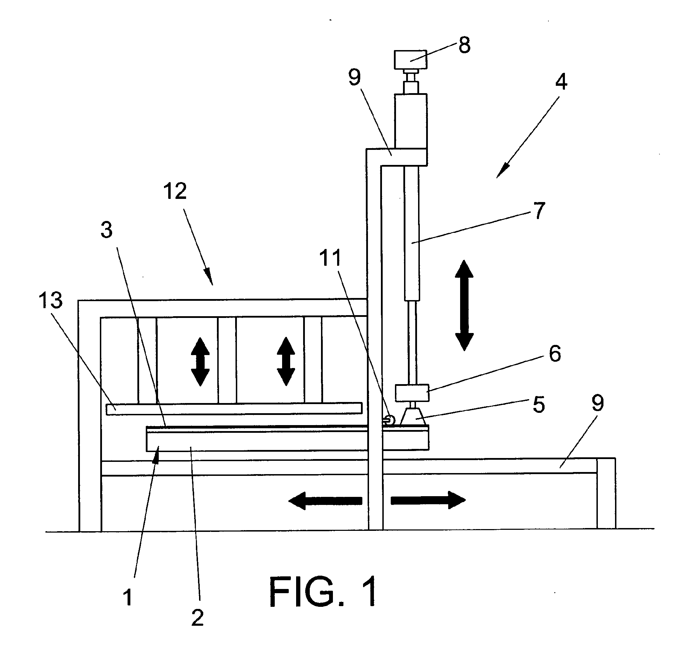

Figure 1. - It shows a side view of the machine to repair panels in which the heating module and the peeling module are observed with the suction pads applied on the external film.

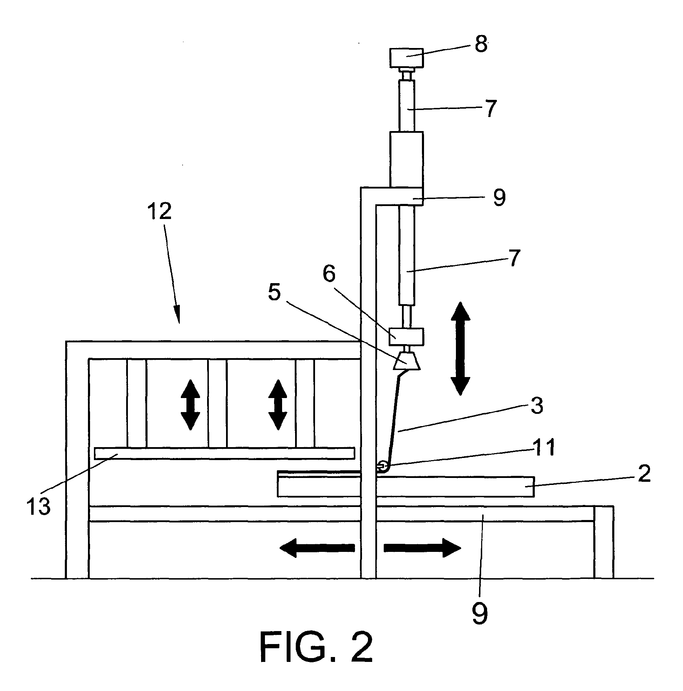

Figure 2. - It shows a side view of the machine to repair panels in which a stage is observed subsequent to that represented in the preceding figure in which it is observed how the external film is detached from the panel.

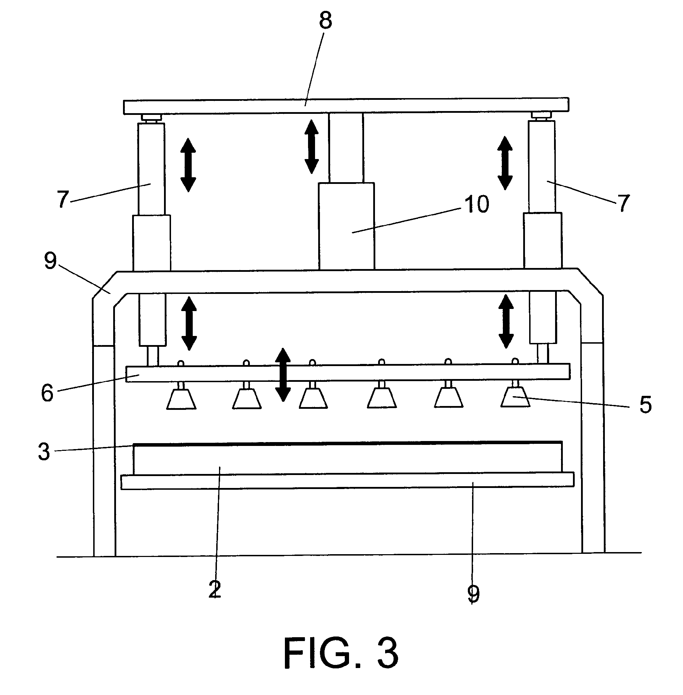

Figure 3. - It shows a front view of the peeling module.
Figure 4. - It shows a schematic view of the modules which intervene in the procedure to repair panels.

### PREFERRED EMBODIMENT OF THE INVENTION

The machine to repair formwork panels object of this invention is of application for composite sandwich type panels (1), which consist of a core, at least one structural skin and an external film or finishing skin (3) which is in contact with the concrete.

The machine fundamentally has a peeling module (4) which incorporates a battery of suction pads (5) mounted on a horizontal support (6) suspended from some side rails (7) pertaining to a gantry (8) which is displaced vertically by the action of a pneumatic cylinder (10) with respect to a frame (9), so that the suction pads (5) descend onto the surface of the external film (3) which has been pre-heated, apply suction to the same in order to proceed subsequently to the raising of the gantry (8) and therefore of the suction pads (5) which will detach the external film (3) with respect to the composite sandwich (2), which is displaced at the same time, in the horizontal direction, by corresponding means of displacement (9) causing the peeling of the formwork panel.

The peeling module (4) incorporates immediately above the panel some guide rollers (11) which collaborate in pulling off the external film (3) during the raising of the suction pads (5).

Prior to the peeling module (4) the machine also has a heating module (12) which consists of a hot plate head (13) vertically displaceable by hydraulic means which are applied on the damaged external film (3), for the heating thereof prior to passing to the peeling module (4).

After the peeling module (4) is a cleaning module (14) which has some cleaning rollers (15) which eliminate the pieces of glue which could remain sticking on the surface of the composite sandwich (2) after peeling off the external film (3).

When the composite sandwich (2) is clean, one proceeds to the application of a new film (3') with the help of the hot plate press (13) which applies pressure on the new film (3') and heats it fastening it to the composite sandwich (2).

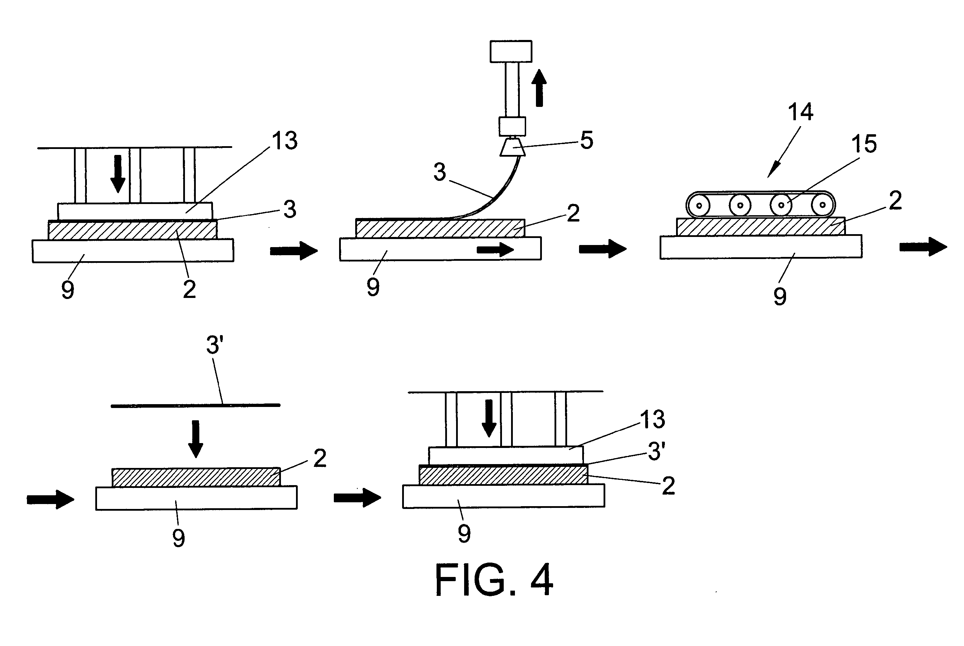

In figure 4 the operations or procedure for repair of formwork panels by means of this machine can be observed, the different stages thereof being described below:
- heating the panel (1) by means of the hot plate press (13) for fusing and deactivating the adhesive present between the composite sandwich (2) and the external film (3),
- application of the suction pads (5) on the external film (3),
- raising of the suction pads (5) and horizontal displacement of the panel for detachment of the external film (3),
- cleaning of the composite sandwich panel (2), when the external film (3) has been removed, by means of the cleaning rollers (15),
- application of the new external film (3') on the composite sandwich (2),
- pressing and heating of the new external film (3') by means of the hot plate head (13),
- withdrawal of the panel with the new film (3') or coating skin.

## Claims

1. - Machine to repair formwork panels of application for sandwich type composite panels (1) which consist of a core of plastic material, at least one structural skin and an external film or finishing skin (3) which is in contact with the concrete, **characterized in that** it comprises a peeling module (4) which incorporates a battery of suction pads (5) which are applied on the upper face of the previously heated external film (3), and are raised detaching it and separating it from the composite sandwich (2), as the panel (1) advances pulled by some means of horizontal displacement (9), said suction pads (5) being mounted on a horizontal support (6) suspended from some side rails (7) pertaining to a gantry (8) which is displaced vertically by the action of a pneumatic cylinder (10) with respect to a frame (9).

2. - Machine to repair formwork panels according to claim 1 **characterized in that** the peeling module (4) incorporates immediately above the position of horizontal displacement of the panel (1), some guide rollers (11) which collaborate in pulling off the external film (3) during the raising of the suction pads (5).

3. - Machine to repair formwork panels according to claim 1 **characterized in that** prior to the peeling module (4) it incorporates a heating module (12) which consists of a hot plate head (13) displaceable vertically by hydraulic means which is applied on the film (3) for the heating thereof prior to passing to the peeling module (4).

4. - Machine to repair formwork panels according to claim 1 **characterized in that** after the peeling module (4) comes a cleaning module (14) in which are some cleaning rollers (15) which eliminate the pieces of glue which could have remained sticking on the surface of the composite sandwich (2) after peeling off the external film (3).

5. - Procedure to repair formwork panels **characterized in that** it is carried out in the machine described in claims 1 to 4 and it consists of the following stages:
- heating the panel (1) by means of the hot plate press (13) for fusing and deactivating the adhesive present between the composite sandwich (2) and the external film (3),
- application of the suction pads (5) on the external film (3) of the panel (1),
- raising of the suction pads (5) with simultaneous horizontal displacement of the panel (1), for detachment of the external film (3),
- cleaning of the composite sandwich (2), when the external film (3) has been removed, by means of the cleaning rollers (15),
- application of the new external film (3') on the composite sandwich (2),
- pressing and heating of the new external film (3') by means of the hot plate head (13) on the composite sandwich (2),
- withdrawal of the panel (1) with the new film (3').
